# EUROPÄISCHE PATENTSCHRIFT

(11) **EP 2 615 346 B1**
(45) Veröffentlichungstag und Bekanntmachung des Hinweises auf die Patenterteilung: **28.03.2018**
(21) Anmeldenummer: 12007986.8
(22) Anmeldetag: 28.11.2012
(51) Int. Cl.: F16L 33/03

(54) **FEDERBANDSCHELLE**
SPRING BELT CLAMP
COLLIER À BANDE ÉLASTIQUE

(30) Priorität: 14.01.2012 DE 102012000717
(43) Veröffentlichungstag der Anmeldung: 17.07.2013
(73) Patentinhaber: NORMA Germany GmbH, 63477 Maintal (DE)
(72) Erfinder: Krauch, Karlheinz, 63546 Hammersbach (DE)
(74) Vertreter: Patentanwälte Olbricht Buchhold Keulertz

(56) Entgegenhaltungen:
- EP-A2- 1 045 186
- WO-A1-2011/099136
- DE-A1-102008 047 038
- DE-C1- 3 832 875
- KR-A- 20060 003 983
- US-A- 5 145 218
- US-A- 5 715 579

## Beschreibung

Die Erfindung betrifft eine Federbandschelle mit einem ringförmig gebogenen Schellenband, das einen ersten Endabschnitt und einen zweiten Endabschnitt aufweist, zwischen denen ein Überlappungsbereich ausgebildet ist und die radial vom Schellenband beabstandet sind.

Derartige Federbandschellen dienen beispielsweise zur Befestigung eines Schlauches auf einem Rohrstutzen. Zur Montage muss die Federbandschelle aufgeweitet werden, so dass sie auf den Schlauch aufgeschoben werden kann. Die Federbandschelle zieht sich aufgrund ihrer Vorspannung zusammen, wird dadurch auf dem Schlauch gehalten und drückt den Schlauch radial an den Rohrstutzen an.

Federbandschellen sind an sich bekannt. Beispielsweise ist in DE 10 2005 036 208 B4 eine Federbandschelle mit Markierungen beschrieben, die dazu dienen, nach erfolgter Montage anzuzeigen, ob eine Federbandschelle mit richtigem Nennmaß verwendet wurde.
Als problematisch und häufig zeitaufwendig erweist sich das erforderliche Aufweiten der Federbandschelle vor der eigentlichen Montage. Das Aufweiten der Federbandschelle erfolgt durch Zusammendrücken der beiden Endabschnitte, wodurch sich eine Durchmesservergrößerung der Federbandschelle ergibt. Um die Federbandschelle im aufgeweiteten Zustand zu halten, ist es bekannt, eine zusätzliche Klammer zu verwenden, die die beiden Endabschnitte zueinander in einem verringerten Abstand hält. Eine derartige Klammer löst sich nach erfolgter Montage in der Regel von den Endabschnitten, wobei die Gefahr besteht, dass die Klammer verloren geht und damit zu einer Verunreinigung der Umgebung beiträgt. Dies ist insbesondere bei Einsätzen der Federbandschelle im Zusammenhang mit bewegten Maschinen und beengten Raumverhältnissen problematisch. Es sind also zusätzliche Vorkehrungen zu treffen, um ein Verlieren der Klammer zu verhindern.

Das Dokument KR 2006 0003983 A offenbart in den Figuren 10-12 eine Federbandschelle gemäß dem Oberbegriff von Anspruch 1.

Der Erfindung liegt nun die Aufgabe zugrunde, eine Federbandschelle anzugeben, die eine einfache Montage ermöglicht.
Erfindungsgemäß wird diese Aufgabe durch eine Federbandschelle gemäß den Merkmalen des Anspruchs 1 gelöst. Es wird also kein zusätzliches Element benötigt, um die Federbandschelle im aufgeweiteten Zustand zu halten. Vielmehr weist die Federbandschelle eine integrierte Rastvorrichtung auf. Dadurch verringert sich der Aufwand zur Herstellung der Federbandschelle. Gleichzeitig gibt es keine Teile mehr, die bei der Montage verloren gehen können. Dabei muss auch kein zusätzlicher Bauraum zur Verfügung gestellt werden, so dass der Einsatz der Federbandschelle auch bei beengten Platzverhältnissen möglich ist. Nach Lösen der Rastvorrichtung zieht sich die Federbandschelle aufgrund ihrer Vorspannung automatisch zusammen, womit die Montage abgeschlossen ist. Erfindungsgemäß weist die Rastvorrichtung eine aus dem ersten Endabschnitt radial nach innen gebogene Lasche und einen Rasthaken auf, der an einer Außenseite des Schellenbandes angeordnet ist. Durch das Herausbiegen der Lasche aus dem ersten Endabschnitt lässt sich ein Teil der Rastvorrichtung ohne zusätzliche Elemente herstellen. Die Lasche wird dabei zunächst ausgestanzt und anschließend entsprechend umgebogen. Über einen Rasthaken, der an der Außenseite des Schellenbandes angeordnet ist, lassen sich dann ausreichende Kräfte übertragen, so dass die Federbandschelle sicher im aufgeweiteten Zustand gehalten werden kann.

Dabei ist besonders bevorzugt, dass der Rasthaken einstückig mit dem Schellenband ausgebildet ist und aus dem Schellenband radial nach außen gebogen ist. Der Rasthaken kann dann wie die Lasche ausgestanzt und anschließend umgebogen sein. Gegenüber einer Federbandschelle, die keine Möglichkeit aufweist, im aufgeweiteten Zustand gehalten zu werden, erhöht sich das Gewicht der erfindungsgemäßen Federbandschelle dann nicht. Vielmehr wird das ohnehin vorhandene Material der Federbandschelle verwendet, um die Rastvorrichtung zu bilden. Dabei ist ein Verlieren von Elementen der Rastvorrichtung nicht möglich, da die Lasche und der Rasthaken einstückig mit der Federbandschelle ausgebildet sind. Das Ausstanzen und Umbiegen stellt einen sehr kostengünstigen Herstellungsschritt dar, so dass die Herstellungskosten für die Federbandschelle sehr gering bleiben. Dabei ergibt sich ein sehr einfacher Aufbau mit geringem Bauraumbedarf für die Federbandschelle.

Bevorzugterweise ist die Lasche vom ersten Endabschnitt weg gerichtet, wobei der Rasthaken zum zweiten Endabschnitt hin gerichtet ist. Durch eine derartige Ausgestaltung wird ein automatisches Verriegeln der Rastvorrichtung erreicht, wenn die Federbandschelle beispielsweise manuell aufgeweitet wird. Die Lasche gleitet dann zunächst über den Rasthaken, der sich dabei radial nach innen verformen kann. Nachdem die Lasche über das Ende des Rasthakens hinaus bewegt wurde, richtet sich der Rasthaken auf, so dass eine Zurückbewegung der Lasche über den Rasthaken verhindert wird. Vielmehr führt die Ausrichtung des Rasthakens dazu, dass sich dieser durch eine Kraft, die durch den Versuch der Federbandschelle, einen geringeren Durchmesser zu erreichen, von der Lasche auf den Rasthaken übertragen wird, weiter aufrichtet. Ein ungewolltes Lösen der Rastvorrichtung wird dadurch verhindert.
Dabei ist besonders bevorzugt, dass der Rasthaken länger ausgebildet ist als die Lasche. Dadurch weist der Rasthaken eine höhere Elastizität als die Lasche auf. Die zum Einrasten erforderliche Verformung wird dann im Wesentlichen vom Rasthaken übernommen. Dadurch lassen sich die erforderlichen Kräfte sehr gut einstellen.
In einer alternativen Ausgestaltung ist die Lasche länger ausgebildet als der Rasthaken. Die Lasche weist dann eine erhöhte Elastizität auf. Dementsprechend erfolgt beim Verrasten im Wesentlichen eine Verformung der Lasche. Die Umformkräfte lassen sich dabei gut einstellen. Vorteilhafterweise weist die Lasche einen in Radialrichtung verlaufenden Anlagebereich für den Rasthaken auf. Dadurch ist eine relativ genau definierte Offenstellung der Federbandschelle einstellbar. Durch die Lage des Anlagebereichs wird dann vorgegeben, wie weit die Federbandschelle aufgeweitet ist. Erfindungsgemäß erstreckt sich der erste Endabschnitt in Umfangsrichtung mindestens über einen Winkelbereich, in dem der Rasthaken ausgebildet ist. Der Rasthaken wird dann von dem ersten Endabschnitt gegen äußere Einflüsse geschützt. Zwar wird der erste Endabschnitt in axialer Richtung den Rasthaken nicht unbedingt vollständig überdecken, er kann aber trotzdem den Rasthaken von äußeren Einflüssen abschirmen. Dabei wird auch erreicht, dass sich die äußeren Umrisse der Federbandschelle durch die Rastvorrichtung gegenüber einer Federbandschelle ohne Rastvorrichtung nicht verändern. Dies ist für manche Anwendungszwecke besonders gewünscht.

Vorzugsweise erstreckt sich die Lasche in Radialrichtung über etwa die Hälfte eines Abstandes zwischen dem ersten Endabschnitt und dem Schellenband. Damit steht zwischen der Lasche und dem Schellenband noch ausreichend Raum zur Verfügung, um den Rasthaken dazwischen durchzuführen. Der Rasthaken selbst muss sich dann aber radial auch nicht unnötig weit nach außen verformen lassen.

Bevorzugterweise ist der Rasthaken mit einem Auslösewerkzeug radial nach innen verformbar, das zwischen dem ersten Endabschnitt und dem Schellenband einführbar ist. Mit Hilfe des Auslösewerkzeugs lässt sich der Rasthaken relativ einfach in das Schellenband hineindrücken, so dass sich der Rasthaken unterhalb der Lasche hindurchbewegen kann. Dies erlaubt eine Verringerung des Durchmessers der Federbandschelle und damit einen festen Sitz der Federbandschelle. Ein entsprechendes Auslösewerkzeug lässt sich relativ einfach herstellen und dabei universell für Federbandschellen mit beliebigen Nenndurchmessern einsetzen. Der Aufwand für das zur Verfügung Stellen eines Auslösewerkzeugs ist damit relativ gering.

Die Erfindung wird im Folgenden anhand eines bevorzugten Ausführungsbeispiels in Verbindung mit der Zeichnung näher beschrieben. Hierin zeigen:
- Fig. 1: eine Federbandschelle in Seitenansicht,
- Fig. 2: eine Federbandschelle in räumlicher Darstellung und
- Fig. 3: die Federbandschelle nach Fig. 2 in gelöstem Zustand.

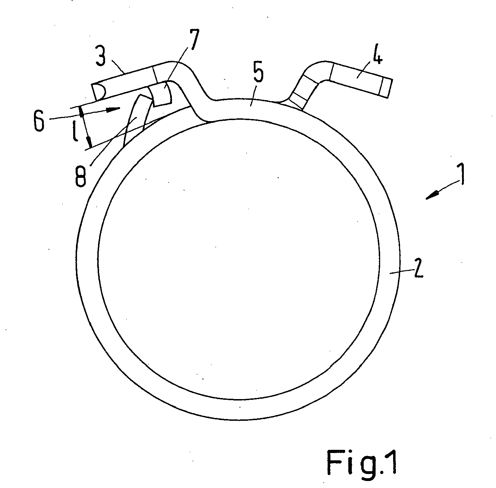

In Fig. 1 ist eine Federbandschelle 1 gezeigt, die ein ringförmig gebogenes Schellenband 2 aufweist. Das Schellenband 2 weist einen ersten Endabschnitt 3 und einen zweiten Endabschnitt 4 auf, die durch entsprechend aufgebogene Enden des Schellenbandes 2 gebildet sind. Dabei sind die Endabschnitte 3, 4 vom Schellenband 2 radial beabstandet.
Zwischen den Endabschnitten 3, 4 ist ein Überlappungsbereich 5 ausgebildet, in dem zwei Lagen des Schellenbandes 2 axial nebeneinander angeordnet sind. Der Überlappungsbereich 5 vergrößert sich, wenn die Federbandschelle 1 ihren Nenndurchmesser einnimmt und sich nicht, wie in der Fig. 1 gezeigt, im aufgeweiteten Zustand befindet. Dafür ist das Schellenband 2 mit einer Vorspannung versehen, die die Federbandschelle 1 radial zusammenzieht.

Um die Federbandschelle 1 in einem aufgeweiteten Zustand halten zu können, so dass eine einfachere Montage der Federbandschelle 1 möglich ist, ist die Federbandschelle 1 mit einer Rastvorrichtung 6 versehen. Die Rastvorrichtung 6 ist dabei in die Federbandschelle 1 integriert, also einstückig mit der Federbandschelle bzw. dem Schellenband 2 und dem ersten Endabschnitt 3 ausgebildet.
Die Rastvorrichtung 6 weist eine Lasche 7 auf, die aus dem ersten Endabschnitt 3 radial nach innen gebogen ist. Zusätzlich weist die Rastvorrichtung 6 einen Rasthaken 8 auf, der aus dem Schellenband 2 herausgebogen ist. Dabei sind die Lasche 7 und der Rasthaken 8 derart plastisch verformt, dass sie im unbelasteten Zustand die in der Fig. 1 gezeigten Stellungen einnehmen.
Um einen axialen Versatz zwischen dem ersten Endabschnitt 3 und der Rastvorrichtung 6 auszugleichen, kann die Lasche 7 und/oder der Rasthaken 8 nicht nur in radialer Richtung gebogen sein, sondern auch in axialer Richtung. Insbesondere ist es dabei möglich, die Lasche 7 als Fortsatz des ersten Endabschnitts 3 in axialer Richtung auszugestalten, der dann in Radialrichtung umgebogen wird.
Dabei ist es vorteilhaft, wenn die Lasche 7 einen Anlagebereich für den Rasthaken 8 aufweist, der in Radialrichtung verläuft. Dadurch steht für den Rasthaken 8 eine definierte Anlagefläche zur Verfügung.
Die Lasche 7 erstreckt sich in Radialrichtung etwa über die Hälfte eines Abstandes 1 zwischen dem ersten Endabschnitt 3 und dem Schellenband 2. Dadurch ist zum einen die Anlagefläche der Lasche 7 groß genug, um sicher mit dem Rasthaken 8 zu verrasten, andererseits steht auch noch ausreichend Raum unterhalb der Lasche 7 zur Verfügung, um den Rasthaken 8 dann, wenn er zum Lösen der Rastvorrichtung elastisch radial nach innen verformt wurde, zwischen der Lasche 7 und dem Schellenband 2 hindurchzulassen.

Zum Verformen des Rasthakens 8 und damit zum Lösen der Rastvorrichtung 6 kann ein Auslösewerkzeug vorgesehen sein, das eine in Umfangsrichtung und/oder in Radialrichtung wirkende Kraft auf den Rasthaken 8 ausüben kann, so dass dieser radial nach innen verformt wird. Dies führt zu einem Lösen der Rastvorrichtung 6, so dass sich die Federbandschelle 1 zusammenziehen kann.

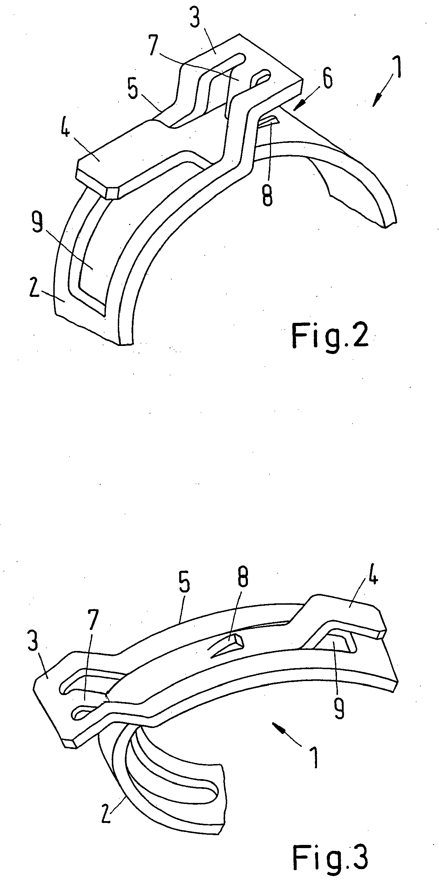

In Fig. 2 ist die Federbandschelle 1 in räumlicher Darstellung gezeigt. Im Unterschied zur Ausführungsform der Federbandschelle 1, wie sie in Fig. 1 gezeigt ist, ist bei der Ausführungsform nach Fig. 2 die Lasche 7 länger ausgebildet als der Rasthaken 8, so dass die Lasche 7 leichter verformbar ist als der Rasthaken 8.

Die Federbandschelle 1 befindet sich in der in Fig. 2 gezeigten Darstellung im gespannten Zustand, weist also einen relativ großen Innendurchmesser auf. Eine Relativbewegung zwischen dem ersten Endabschnitt 3 und dem zweiten Endabschnitt 4 wird durch die Rastvorrichtung 6 verhindert, indem die Lasche 7 hinter dem Rasthaken 8 verrastet ist. Zur Aufnahme des zweiten Endabschnitts 4 ist im Schellenband 2 ein Schlitz 9 vorgesehen, wobei der Endabschnitt 4 mit einer geringeren axialen Breite ausgebildet ist, um im Schlitz 9 aufgenommen werden zu können. Über dem Schlitz 9 bildet sich dann der Überlappungsbereich 5 aus.

Die Lasche 7 ist einstückig mit dem ersten Endabschnitt 3 hergestellt und radial derart nach innen gebogen, dass sie mit dem Rasthaken 8 zusammenwirken kann.

In Fig. 3 ist die Federbandschelle 1 nach Fig. 2 im gelösten Zustand gezeigt, also nach Lösen der Rastvorrichtung 6. Die Lasche 7 ist also beispielsweise durch Einwirken eines Auslösewerkzeugs derart verformt worden, dass die Lasche 7 über den Rasthaken 8 bewegt worden ist, so dass sich die Endabschnitte 3, 4 in Umfangsrichtung voneinander weg bewegen konnten. Aufgrund der Vorspannung des Schellenbandes 2 hat sich die Federbandschelle 1 zusammengezogen und weist nun gegenüber dem in Fig. 2 gezeigten Zustand einen verringerten Durchmesser auf. Dementsprechend hat sich der Überlappungsbereich 5 vergrößert.

Durch die Aufnahme des zweiten Endabschnitts 4 im Schlitz 9 des Schellenbands 2 kann sowohl die Lasche 7 als auch der Rasthaken 8 axial mittig im Federband 2 ausgebildet sein. Dadurch ergibt sich eine sehr symmetrische Kraftübertragung. Gleichzeitig wird eine einfache Fertigung ermöglicht.

Die gesamte Federbandschelle 1, also inklusive Schellenband 2, den Endabschnitten 3, 4 und der Rastvorrichtung 6, sind aus einem einzigen Element hergestellt, beispielsweise aus einem Stahlband. Dabei wird die Rastvorrichtung 6 durch einfaches Ausstanzen und Umbiegen der Lasche und des Rasthakens gebildet.

Es wird dadurch eine Federbandschelle erhalten, die ein Halten im aufgeweiteten Zustand ermöglicht, wobei ein Herstellungsaufwand gleichzeitig gering gehalten wird. Diese Federbandschelle hat einen einfachen Aufbau und eine geringe Masse und benötigt nur einen geringen Bauraum. Dabei kommt sie ohne zusätzliche Bauteile aus, was eine einfache Handhabung gewährleistet.

## Patentansprüche

1. Federbandschelle mit einem ringförmig gebogenen Schellenband, das einen ersten Endabschnitt und einen zweiten Endabschnitt aufweist, zwischen denen ein Überlappungsbereich ausgebildet ist und die radial vom Schellenband beabstandet sind, wobei sie eine Rastvorrichtung (6) aufweist, die zumindest teilweise in den ersten Endabschnitt (3) integriert ist, wobei die Rastvorrichtung (6) in einem aufgeweiteten Zustand der Federbandschelle (1) verrastbar ist, wobei die Rastvorrichtung (6) eine aus dem ersten Endabschnitt (3) radial nach innen gebogene Lasche (7) und einen Rasthaken (8) aufweist, der an einer Außenseite des Schellenbandes angeordnet ist, **dadurch gekennzeichnet, dass** sich der erste Endabschnitt (3) in Umfangsrichtung mindestens über einen Winkelbereich erstreckt, in dem der Rasthaken (8) ausgebildet ist, wobei sich der zweite Endabschnitt (4) in eine zum ersten Endabschnitt (3) entgegen gesetzte Umfangsrichtung erstreckt.

2. Federbandschelle nach Anspruch 1, **dadurch gekennzeichnet, dass** der Rasthaken (8) einstückig mit dem Schellenband (2) ausgebildet ist und aus dem Schellenband (2) radial nach außen gebogen ist.

3. Federbandschelle nach einem der Ansprüche 1 oder 2, **dadurch gekennzeichnet, dass** die Lasche (7) vom ersten Endabschnitt (3) weg gerichtet ist, wobei der Rasthaken (8) zum zweiten Endabschnitt (4) hin gerichtet ist.

4. Federbandschelle nach einem der Ansprüche 1 bis 3, **dadurch gekennzeichnet, dass** der Rasthaken (8) länger ausgebildet ist als die Lasche (7).

5. Federbandschelle nach einem der Ansprüche 1 bis 4, **dadurch gekennzeichnet, dass** die Lasche (7) einen in Radialrichtung verlaufenden Anlagebereich für den Rasthaken (8) aufweist.

6. Federbandschelle nach einem der Ansprüche 1 bis 5, **dadurch gekennzeichnet, dass** sich die Lasche (7) in Radialrichtung über etwa die Hälfte eines Abstandes zwischen erstem Endabschnitt (3) und Schellenband (2) erstreckt.

7. Federbandschelle nach einem der Ansprüche 1 bis 6, **dadurch gekennzeichnet, dass** der Rasthaken mit einem Auslösewerkzeug radial nach innen verformbar ist, das zwischen erstem Endabschnitt (3) und Schellenband (2) einführbar ist.

## Claims

1. Spring band clamp with an annularly curved clamp band which has a first end portion and a second end portion, between which an overlap region is formed and which are spaced apart radially from the clamp band, wherein it has a locking device (6) which is at least partly integrated into the first end portion (3), wherein the locking device (6) can be locked in an expanded state of the spring band clamp (1), wherein the locking device (6) has a tab (7) curved radially inwards from the first end portion (3) and a latching hook (8) which is arranged on an outer side of the clamp band, **characterised in that** the first end portion (3) extends in the circumferential direction at least over an angular region in which the latching hook (8) is formed, the second end portion (4) extending in a circumferential direction opposite the first end portion (3).

2. Spring band clamp according to claim 1, **characterised in that** the latching hook (8) is formed integrally with the clamp band (2) and is curved radially outwards from the clamp band (2).

3. Spring band clamp according to any one of claims 1 or 2, **characterised in that** the tab (7) is directed away from the first end portion (3), the latching hook (8) being directed towards the second end portion (4).

4. Spring band clamp according to any one of claims 1 to 3, **characterised in that** the latching hook (8) is longer than the tab (7).

5. Spring band clamp according to any one of claims 1 to 4, **characterised in that** the tab (7) has a contact region, extending in the radial direction, for the latching hook (8).

6. Spring band clamp according to any one of claims 1 to 5, **characterised in that** the tab (7) extends in the radial direction over approximately half the distance between the first end portion (3) and the clamp band (2).

7. Spring band clamp according to any one of claims 1 to 6, **characterised in that** the latching hook can be deformed radially inwards by a release tool which can be inserted between the first end portion (3) and the clamp band (2).

## Revendications

1. Collier de serrage élastique avec un collier de serrage plié en forme d'anneau qui comporte un premier tronçon terminal et un deuxième tronçon terminal entre lesquels une zone de chevauchement est formée et qui sont à une certaine distance radiale du collier de serrage,
lequel comporte un dispositif d'encliquetage (6) qui est intégré au moins partiellement dans le premier tronçon terminal (3),
dans lequel le dispositif d'encliquetage (6) peut être encliqueté lorsque le collier de serrage élastique (1) est dans un état élargi,
dans lequel le dispositif d'encliquetage (6) comporte une languette (7) pliée de façon radiale vers l'intérieur à partir du premier tronçon terminal (3) et un crochet d'encliquetage (8) agencé au niveau d'un côté extérieur du collier de serrage,
**caractérisé en ce que** le premier tronçon terminal (3) s'étend en direction circonférentielle au moins sur une plage angulaire dans laquelle est formé le crochet d'encliquetage (8) et **en ce que** le deuxième tronçon terminal (4) s'étend dans une direction circonférentielle opposée par rapport au premier tronçon terminal (3).

2. Collier de serrage élastique selon la revendication 1, **caractérisé en ce que** le crochet d'encliquetage (8) est formé d'un seul tenant avec le collier de serrage (2) et est plié de façon radiale vers l'extérieur à partir du collier de serrage (2).

3. Collier de serrage élastique selon l'une quelconque des revendications 1 ou 2, **caractérisé en ce que** la languette (7) est dirigée de manière à s'éloigner du premier tronçon terminal (3) et le crochet d'encliquetage (8) est dirigé en direction du deuxième tronçon terminal (4).

4. Collier de serrage élastique selon l'une quelconque des revendications 1 à 3, **caractérisé en ce que** le crochet d'encliquetage (8) est réalisé plus long que la languette (7).

5. Collier de serrage élastique selon l'une quelconque des revendications 1 à 4, **caractérisé en ce que** la languette (7) présente une zone d'appui qui s'étend dans la direction radiale et qui est destinée au crochet d'encliquetage (8).

6. Collier de serrage élastique selon l'une quelconque des revendications 1 à 5, **caractérisé en ce que** la languette (7) s'étend en direction radiale sur à peu près la moitié d'une distance entre le premier tronçon terminal (3) et le collier de serrage (2).

7. Collier de serrage élastique selon l'une quelconque des revendications 1 à 6, **caractérisé en ce que** le crochet d'encliquetage peut être déformé de façon radiale vers l'intérieur au moyen d'un outil de détachement qui peut être introduit entre le premier tronçon terminal (3) et le collier de serrage (2).
